# EUROPEAN PATENT APPLICATION

(11) **EP 2 241 996 A1**
(43) Date of publication of application: **20.10.2010**
(21) Application number: 10250130.1
(22) Date of filing: 27.01.2010
(51) Int. Cl.: G06F 21/00

(54) **IC chip and information processing apparatus mounting IC chip**

(30) Priority: 16.04.2009 JP 2009099519
(71) Applicant: Hitachi Ltd., Chiyoda-ku Tokyo (JP)
(72) Inventor: Yamazaki, Hiroki, Tokyo 100-8220 (JP); Aikawa, Kazunori, Tokyo 100-8220 (JP); Hashimoto, Kazunori, Tokyo 100-8220 (JP)
(74) Representative: Calderbank, Thomas Roger

(57) **Abstract**

An IC chip includes: a first memory (10) which stores a control program for executing cryptographic processing; a second memory (20) which stores an application; an arithmetic processor (30) which receives first data including at least part of a cryptographic private key stored in a predetermined area of the application, and executes the cryptographic processing in accordance with the control program; and an auxiliary arithmetic processor (40) which executes predetermined arithmetic processing under control of the arithmetic processor (30). If the first data does not match a data format defined by a software interface of the auxiliary arithmetic processor (40), the arithmetic processor (30) controls to generate second data by processing the first data so as to match the data format, and to store the generated second data in a data table provided in the second memory.

## Description

The present invention relates to an IC chip for executing cryptographic processing and an information processing apparatus mounting the IC chip.

For recent financial transactions or entrance/exit management using an information processing apparatus, person identification is generally performed by confirming information such as a security number and a password only the person can know or by confirming a card or the like only the person can possess. An IC card, particularly an IC card mounting an IC chip having tamper resistant characteristics, can execute cryptographic processing by utilizing secret information protected in the IC chip, and is widely used for person identification.

Such secret information stored in the IC card may be a private key of public key cryptography. Since the private key of public key cryptography is extremely high secrecy information, it is desired to store the encrypted private key in order to ensure more firm security.

JP-A-2000-349749 describes a method of storing a private key by encrypting it with a password. More specifically, as a private key and a password desired to be kept by a user are input, a key of Data Encryption Standard (DES) for encrypting the private key with the password is generated. By using this key, the private key is encrypted, and an identifier generated from the private key and the encrypted private key are stored in a key management table. As data to be processed is input together with the identifier and password, the encrypted private key is acquired from the key management table by using the identifier as a search key, the encrypted private key is decrypted by using the password, and data is processed by using the decrypted private key.

It is possible to improve security and reliability by executing processing using a private key of public key cryptography during communications involving, e.g., a noncontact communication interface. Communications involving the noncontact communication interface are desired to be performed at high speed. However, it takes time to execute a process of decrypting the private key of public key cryptography and executing public key cryptographic processing by using the decrypted private key, resulting in poor usability.

It is therefore an object of the present invention to provide an easy-to-use IC chip while ensuring security, and an information processing apparatus mounting the IC chip.

An IC chip of the present invention includes: a first memory which stores a control program for executing cryptographic processing; a second memory which stores an application; an arithmetic processor which receives first data including at least part of a cryptographic private key stored in a predetermined area of the application, and executes the cryptographic processing in accordance with the control program; and an auxiliary arithmetic processor which executes predetermined arithmetic processing under control of the arithmetic processor. If the first data does not match a data format defined by a software interface of the auxiliary arithmetic processor, the arithmetic processor controls to generate second data by processing the first data so as to match the data format, and to store the generated second data in a data table provided in the second memory.

According to the present invention, it is possible to provide an easy-to-use IC chip while ensuring security, and an information processing apparatus mounting the IC chip.

Other objects, features and advantages of the invention will become apparent from the following description of the embodiments of the invention taken in conjunction with the accompanying drawings.

In the drawings:
Fig. 1 is a diagram illustrating an example of the structure of an IC card.
Fig. 2 is a diagram illustrating an example of data flow in the IC card.
Fig. 3 is a flow chart illustrating an example of a process of encrypting a private key of public key cryptography and a process of storing data in a data table.
Fig. 4 is a flow chart illustrating an example of public key cryptographic processing.
Fig. 5 is a flow chart illustrating an example of an application deleting process.

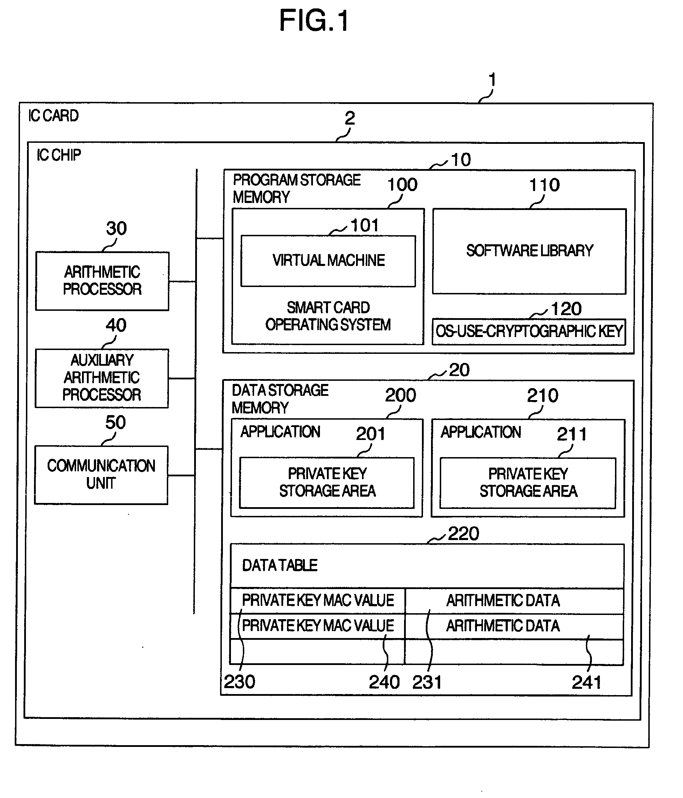

Fig. 1 is a diagram illustrating an example of the structure of an IC card.

The IC card 1 has an IC chip 2 mounted thereon. Material of the IC card 1 is, for example, plastic or the like. Although not shown in the example illustrated in Fig. 1, a magnetic recording tape may be added to the IC card 1, an emboss process and the like may be executed, or an antenna for noncontact communications may be mounted.

The IC chip 2 has a function of executing cryptographic processing for data acquired from the external and for data stored in the IC chip. The IC chip 2 may be mounted on the IC card 1, being exposed to the surface of the IC card 1, or may be buried in the IC card 1.

The IC chip 2 includes a program storage memory 10, a data storage memory 20, an arithmetic processor 30, an auxiliary arithmetic processor 40 and a communication unit 50. These components are interconnected by a communication bus or the like. In the example illustrated in Fig. 1, although the program storage memory 10 and data storage memory 20 are discrete, these memories may be structured by a single memory.

The arithmetic processor 30 controls the entirety of the IC chip 2, and may be a microprocessor. The arithmetic processor 30 reads a program stored in the program storage memory 10 to execute a process such as cryptographic processing.

The auxiliary arithmetic processor 40 is a coprocessor for executing a process dedicated to predetermined arithmetic processes under control of the arithmetic processor 30. For example, when the arithmetic processor 30 executes a cryptographic processing program stored in the program memory 10, the auxiliary arithmetic processor 40 executes predetermined arithmetic processes such as cryptographic calculations and Montgomery reduction for performing modular multiplication at high speed.

The communication unit 50 transmits and receives information between the IC chip 2 and an external apparatus. The communication unit 50 may be a contact communication module in conformity with communication rules such as ISO/IEC 7816, a noncontact communication module in conformity with communication rules such as ISO/IEC 14443, a USB module, and a module in conformity with Single Wire Protocol (SWP).

The program storage memory 10 is made of a semiconductor memory such as Read Only Memory (ROM), or the like, and stores control programs to be executed by the arithmetic processor 30. The program storage memory 10 stores a smart card operating system 100 (hereinafter called card OS 100), a library 110 and an OS-use-cryptographic key 120. In the following, the arithmetic processor 30, auxiliary arithmetic processor 40, card OS 100 and library 110 are collectively called platform.

The card OS 100 has a virtual machine 101 which is used when data is transferred to and from a general application independent from the platform, and controls to read an application stored in the library 110 or data storage memory 20. The virtual machine101 transfers data to and from a general application in accordance with a software interface (API) which defines a data format such as a type and a condition of data to be transferred.

The card OS 100 uses, for example, MULTOS (registered trademark) or Java (registered trademark). In this example, although the virtual machine 101 is used, the embodiment is not limited thereto. Without using the virtual machine, the arithmetic processor 30 may directly execute an application.

The library 110 includes programs for executing processes such as cryptographic processing, each program being read by the card OS 100 and executed by the arithmetic processor 30. The library 110 transfers data to and from the card OS 100 in accordance with a software interface which defines a data format such as a type and a condition of data to be transferred.

The OS-use-cryptographic key 120 is a cryptographic key to be used in cryptographic processing to be executed by the arithmetic processor 30. For example, the OS-use-cryptographic key 120 may be a key for common key block cryptography. In this example, although the OS-use-cryptographic key 120 is stored in the program storage memory 10, the embodiment is not limited thereto. For example, the whole or part of the cryptographic key may be stored in other modules such as data storage memory 20 and arithmetic processor 30.

The data storage memory 20 is made of a semiconductor memory such as an Electrically Erasable and Programmable ROM (EEPROM), or the like, and stores applications 200 and 210 and a data table 220.

The applications 200 and 210 are programs for executing public key cryptographic processing. These programs are executed by the arithmetic processor 30 via the software interface of the virtual machine 101. The applications 200 and 210 have private key storage areas 201 and 211, respectively, to store public key cryptography private keys (hereinafter abbreviated to private keys) to be used for public key cryptographic processing. In the example illustrated in Fig. 1, although two applications are stored, the number of applications to be stored is not limited to two, but one or three or more applications may be stored. It is preferable that the data storage memory 20 can add an application acquired by download or the like, and can delete a stored application.

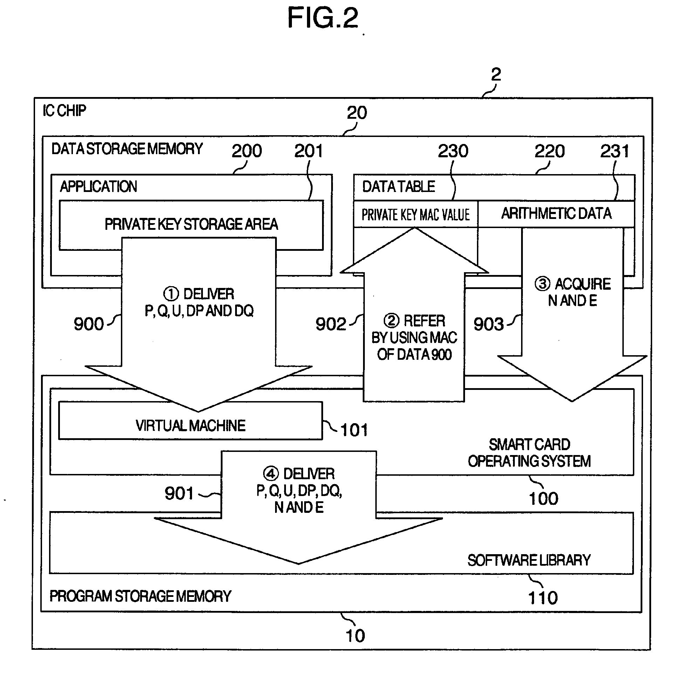

Examples of data transferred among the applications 200 and 210, card OS 100 and library 110 will be described with reference to Fig. 2. In the example illustrated in Fig. 2, although the application 200 is used, the operation is similar when the application 210 is used. In Fig. 2, structures similar to those illustrated in Fig. 1 are represented by identical reference numerals, and the description thereof is omitted.

In the example illustrated in Fig. 2, the application 200 delivers the whole or part of the private key stored in the private key storage area 201 to the card OS 100. For example, if the private key is a private key of Rivest Shamir Adleman (RSA) public key cryptography, data P, Q, U, DP and DQ (five data pieces are collectively called data 900) is delivered to the card OS 100. In this case, if the application 200 is a general application independent from the platform, data is required to be transferred to the card OS 100 via the virtual machine 101. In this example, it is assumed that there is preliminary agreement that secret information is transferred between the virtual machine 101 and application 200 in the format of the data 900.

P, Q, U, DP and DQ are generally used as an RSA public key cryptography private key, and respectively indicate: a first private prime number; a second private prime number; a private coefficient; a private exponent based on the first private prime number; and another private exponent based on the second private prime number.

As described above, in order to speed up public key cryptographic processing, it is necessary to use the auxiliary arithmetic processor which is a coprocessor for performing processes dedicated to particular calculations and the library 110 as programs for executing cryptographic processing. Although the card OS 100 is required to deliver the received data to the auxiliary arithmetic processor 40 and library 110, generally the coprocessor and library cannot change freely the internal processes, and the software interface to be used is determined in advance. For example, since the library 110 cannot receive the data 900, it is necessary for the card OS 100 to generate data 901 by adding data such as N and E (a modulus number and a public exponent, respectively).

In the example illustrated in Fig. 2, although RSA public key cryptography is used, the embodiment is not limited thereto. Other public key cryptography such as public key cryptography based on elliptic curve cryptography, and other common key cryptography may also be used.

As described above, if the auxiliary arithmetic processor 40 and library 110 are used to speed up public key cryptographic processing, it is necessary to generate such data matching these software interfaces. However, if data is generated each time public key cryptographic processing is executed, there arises a problem that processing cannot be speeded up. In order to solve this problem, it is expected that the generated data is stored. If the generated data is stored, an identifier is required to read the data stored for each of a plurality of applications. However, as described above, since the format of data to be delivered is determined in advance by the software interfaces, it is not possible to use an identifier of a desired format. On the other hand, if secret information itself such as the data 900 is used as an identifier, although data can be delivered, there arises a problem that security is not ensured. Description will now be made on a method of setting an identifier and the data table 220 in the data storage memory 20.

The data table 220 stores private key Message Authentication Code (MAC) values 230 and 240 in correspondence with arithmetic data 231 and 241. In the example illustrated in Fig. 1, although two sets of the private key MAC value and arithmetic data are stored, the embodiment is not limited thereto, but one set or three sets of the data may be stored. A plurality of arithmetic data pieces may be stored in correspondence with one private key MAC value.

This private key MAC value is a Cipher Block Chaining (CBC)-MAC value of the data 900 and is an identifier for referring to the data table 220. The CBC-MAC value is a value of the last block among MAC values obtained as a result of performing block cryptography of a CBC for the cryptographic object such as data 900. Since the private key MAC value is generated from data such as data 900 matching the software interfaces of the platform, it is possible to deliver data to the library 110 and the like. Further, when secret information such as data 900 is encrypted, it is possible to generate an identifier to be used when information relevant to the secret information is read from the data table 220. It is possible to efficiently encrypt the secret information.

In the block cryptography of the CBC mode, cryptographic processing is executed for an exclusive OR of a plain text block and a cryptographic result of the preceding block, and the result is used as the encrypted text block. Therefore, in the block cryptography of the CBC mode, since whole plain text messages are encrypted in a chaining manner, it is possible to use the encrypted result of the last block (this is called CBC-MAC value), as a hash value reflecting the whole plain text messages.

Since the CBC-MAC value is generated by cryptographic processing, there is only a small risk such as leakage of secret information such as data 900 during calculations. Calculations are therefore executed securely. Further, it is not possible to recover original secret information from the CBC-MAV value. Even if comparison calculations of the identifier for table reference are leaked to the external by illegal attack to the IC chip, it is not possible to acquire original secret information from the leaked information so that security is effectively maintained.

The data table 220 stores, as the arithmetic data, data (e.g., generated data N, E and the like, or data 901 including the generated data) obtained from the secret information (e.g., data 900) supplied from the applications 200 and 210 by making the secret information match the software interfaces of the library 110 and the like.

For example, the virtual machine 101 and library 110 may have different data padding methods and different endians of multibyte length data. If the virtual machine 101 processes multibyte length data in a big endian order and the library 110 processes multibyte length data in a little endian order, the multibyte length data in the big endian order is converted into the multibyte length data in the little endian order to be stored as the arithmetic data. Endian conversion involves memory copy. In order to prevent leakage of the secret information under memory copy from consumption power waveforms, it is necessary to randomize a copy order or execute other processes so that it takes time correspondingly. If the converted data is stored as the arithmetic data, the process time can be shortened. If the data to be stored as the arithmetic data is secret information, this information is encrypted and stored. When this information is used, the information is decrypted.

An example of a data flow in the IC chip 2 will be described complementarily with reference to Fig. 2.

The data 900 is delivered from the application 200 to the card OS 100 via the virtual machine 101. The arithmetic processor 30 calculates a CBC-MAC value of the whole or part of the data 900 by using the card OS, and refers to the data table 220 by using the calculated value (data 902). If the reference indicates that the data 902 is coincident with the private key MAC value 230, the card OS 100 reads the arithmetic data 231 and uses it as data 903. In the example illustrated in Fig. 2, the data 903 is N and E. The card OS 100 delivers data 900 and 903 to the library 110 as data 901.

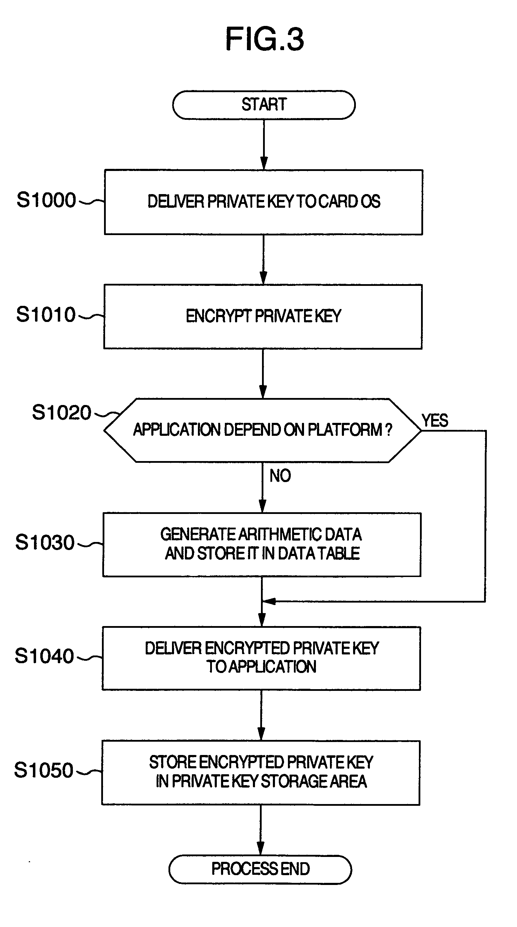

Next, with reference to Fig. 3, description will be made on examples of a process of encrypting a private key and a process of storing data in the data table 220.

The process flow illustrated in Fig. 3 is executed by the arithmetic processor 30 in accordance with a program such as card OS 100. This process flow starts when an application newly acquired by download or the like is stored in the data storage memory 20 or when the application is executed at the first time. In the following description, it is assumed that the newly stored application or the application executed at the first time is the application 200.

First, the application 200 delivers the private key stored in the private key storage area 201 to the card OS 100 via the virtual machine (S1000). In this case, the application 200 may deliver the value itself of the private key to the card OS 100, or may deliver information for identifying the private key storage area 201. Upon reception of the private key, the arithmetic processor 30 converts the endian of the private key into the endian suitable for the platform, and encrypts the private key with the OS-use-cryptographic key 120 by a CBC-MAC method (S1010).

It is judged whether the application 200 does not depend on the platform (S1020). If the application depends on the platform, data can be delivered to the library 110 and the like without involving an arithmetic process, and the flow advances to S1040. In the example illustrated in Fig. 1, the data table 220 is provided in advance. Instead, if all applications stored in the data storage memory 20 depend of the platform, the data table 220 is not provided, and if an application independent from the platform is newly stored, the data table 220 is provided.

If the application does not depend upon the platform (No at S1010), the arithmetic processor 30 generates the arithmetic data 231. The generated arithmetic data 231 is stored in the data table 220, in correspondence with the private key MAC value 230 obtained by the encryption process at S1010 (S1030).

As a private key MAC value 230 is generated at S1010, the encrypted private key is delivered from the card OS 100 to the application 200 via the virtual machine 101 (S1040).

The application 200 stores the encrypted private key received from the card OS 100 in the private key storage area 201 (S1050). In this case, it is preferable to delete the private key before encryption.

The process flow illustrated in Fig. 3 is only an example, and the embodiment is not limited thereto. For example, S1030 and S1050 may be executed at the same timing. S1040 and S1050 may be executed before S1020.

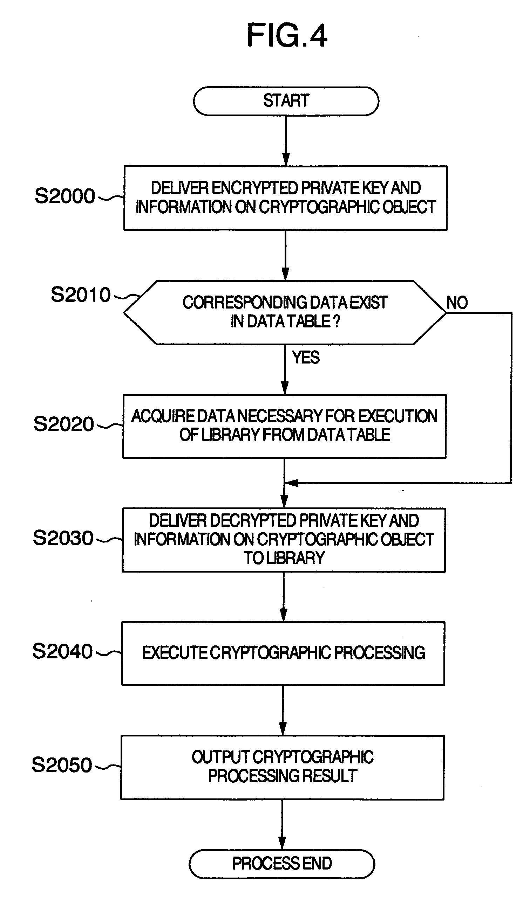

Next, with reference to Fig. 4, description will be made on the process flow to be executed by public key cryptographic processing. In the following description, it is assumed that the application 200 includes settlement information and the IC card 1 starts communicating a card reader such as an ATM.

The encrypted private key is first read from the private key storage area 201 of the application 200, and the encrypted private key and information on a cryptographic object such as settlement information are delivered to the virtual machine 101 (S2000). If it is determined that the process illustrated in Fig. 3 is executed when the application is to be executed at the first time, there is a case in which the private key is still not encrypted. In this case, the process illustrated in Fig. 3 is executed at S2000 to deliver the encrypted private key and the information on the cryptographic object.

When the card OS 100 receives the encrypted private key (MAC value) via the virtual machine 101, the arithmetic processor 30 compares the last block (CBC-MAC value) of the encrypted private key and the private key MAC value in the data table 220 (S2010).

If corresponding data exists in the data table 220, the arithmetic data is acquired from the data table 220 (S2020). If corresponding data does not exist in the data table 220, the flow skips to S2030.

It is judged before S2010 whether the application to be executed depends on the platform. If the application depends on the platform and arithmetic data is unnecessary, the process at S2010 may be omitted and the process may start from S2030. Further, if corresponding data does not exist at S2010, judgment at S1020 illustrated in Fig. 3 is executed, and if the arithmetic data is necessary, the process at S1030 is executed to thereafter advance to S2030. When these processes are to be executed, it is preferable that a flag is set indicating that the arithmetic data is not necessary in the data table. In this case, only when the flag is not set, it is possible to control in such a manner that the process S1020 is executed after the process S2010 to omit unnecessary processes.

The arithmetic processor 30 decrypts the encrypted private key received by the card OS 100 at S2000 with the OS-use-cryptographic key 120. The information on the cryptographic object such as settlement information, decrypted private key and arithmetic data obtained at the process S2020 are delivered from the card OS 100 to the library 110 (S2030). In accordance with the program of the library 110, the arithmetic processor 30 executes cryptographic processing for the information to be encrypted, such as settlement information, by using the auxiliary arithmetic processor 40 (S2040). The encrypted information is delivered from the library 110 to the application 200 via the card OS 100, and output from the communication unit 50 (S2050). Instead of an output from the communication unit 50, or in addition to the output from the communication unit, the encrypted information may be stored in a predetermined area of the application 200 at S2050.

As described above, even if the auxiliary arithmetic processor 40 and library 110 are used as in the example illustrated in Fig. 1, the CBC-MAC value of the private key is stored as a data table reference value, and data necessary for delivery of data to the auxiliary arithmetic processor 40 and the like is stored. In this manner, it becomes possible to speed up processing without lowering security.

In the structure illustrated in Fig. 1, although the library 110 is used, the library 110 may not be used but the auxiliary arithmetic processor 40 may execute cryptographic processing. In this case the auxiliary arithmetic processor 40 is assumed to be an arithmetic processor dedicated to, for example, Montgomery reduction. The Montgomery reduction is an arithmetic process capable of shortening a process time for modular multiplication, and can speed up the public key cryptographic processing. When a number is to be Montgomery-multiplied, a value of R² mod N becomes necessary, the value being determined from a modulus number N and R = 2^{DL} (where DL is a bit length of the modulus number N). In the modular calculations for cryptography including the public key cryptography, if the software interfaces of the application and virtual machine can not deliver R² mod N, it becomes necessary that the preceding modular calculation obtains a value of R² mod N from N, similar to the example illustrated in Figs. 1 and 2. This process takes time. A value of R² mod N is decided uniquely from the value N. It is possible to speed up the process time by using the data table 220, obtaining the private key MAC value from N, and storing the value of R² mod N as the arithmetic data in correspondence with the private key MAC value. Since the value N is not secret information, the private key MAC value may be calculated by a method without tamper resistant characteristics. The CBC-MAC cryptography may not be used.

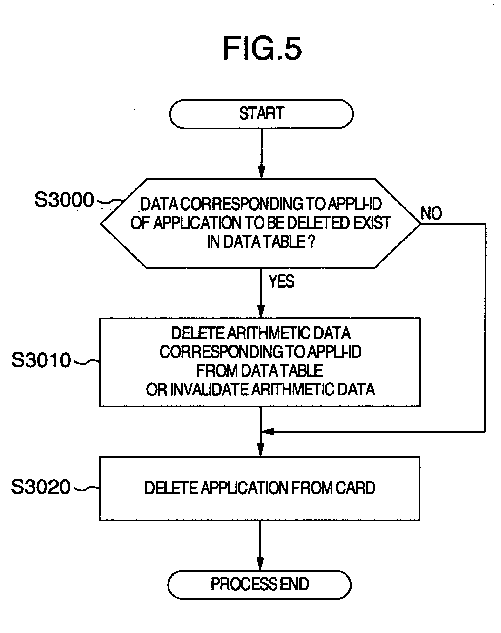

If the application 200 is deleted from the IC chip 2 or becomes unusable by a lock function, the private key MAC value 230 and arithmetic data 231 may be deleted from the data table 220 or may be invalidated. In this case, a capacity of the data storage memory 20 can be saved. An application ID for identifying an application may be stored in the data table 220 together with the private key MAC value and arithmetic data, and when an application is deleted, the arithmetic data and the like may be deleted from the data table 220 by using the application ID. For example, as illustrated in the process flow of Fig. 5, when an instruction of application deletion or invalidation is input, it is checked whether an application ID coincident with an ID of the application exists in the data table 220 (S3000). If the application ID exists, the arithmetic data and private key MAC value corresponding to the application ID are deleted or invalidated (S3010). Thereafter, the application is deleted or invalidated (S3020). In Fig. 5, although the process S3020 is executed after the process S3010, the embodiment is not limited thereto. For example, the processes S3010 and S3020 may be executed at the same timing, or the process S3020 may be executed before the process S3000.

The data table 220 may be formed at the timing when a security level of the IC chip 2 is changed. A change in the security level of the IC chip 2 is, for example, a change from a first security level limiting part of the functions (at shipment from a factory or other times) to a second security level allowing an application to execute a desired function (at market distribution or other times).

As described above, according to the present invention, it is possible to provide an easy-to-use and high speed IC chip while ensuring security, and an IC card mounting the IC chip. In the example illustrated in Fig. 1, although the IC chip is mounted on the IC card, the embodiment is not limited thereto, but the IC chip may be mounted on an information processing apparatus such as a mobile phone.

It should be further understood by those skilled in the art that although the foregoing description has been made on embodiments of the invention, the invention is not limited thereto and various changes and modifications may be made without departing from the spirit of the invention and the scope of the appended claims, as interpreted by the description and drawings.

## Claims

1. An IC chip comprising:
a first memory (10) which stores a control program for executing cryptographic processing;
a second memory (20) which stores an application;
an arithmetic processor (30) which receives first data including at least part of a cryptographic private key stored in a predetermined area of the application, and executes the cryptographic processing in accordance with the control program; and
an auxiliary arithmetic processor (40) which executes predetermined arithmetic processing under control of the arithmetic processor (30),
wherein if the first data does not match a data format defined by a software interface of the auxiliary arithmetic processor (40), the arithmetic processor (30) controls to generate second data by processing the first data so as to match the data format, and to store the generated second data in a data table provided in the second memory.

2. The IC chip according to claim 1, wherein the arithmetic processor controls to encrypt the cryptographic private key with a cryptographic key stored in the first memory (10), to generate the second data, and to store the second data in the data table by using part of the encrypted cryptographic private key as an identifier.

3. The IC chip according to claim 2, wherein when the application is to be executed, the arithmetic processor (30) controls to read the second data from the data table by using the identifier, and to deliver the second data to the auxiliary arithmetic processor (40).

4. The IC chip according to claim 2, wherein when the application is newly stored in the second memory (20) or when the application is executed at a first time, the arithmetic processor (30) encrypts the cryptographic private key and generates the second data.

5. The IC chip according to claim 2, wherein the arithmetic processor (30) controls to store the encrypted cryptographic private key in the predetermined area.

6. The IC chip according to claim 1, wherein the first memory (10) has a virtual machine (101), and the arithmetic processor (30) receives the first data via the virtual machine (101).

7. An information processing apparatus comprising:
a first memory (10) which stores a control program for executing cryptographic processing;
a second memory (20) which stores an application;
an arithmetic processor (30) which receives first data including at least part of a cryptographic private key stored in a predetermined area of the application, and executes the cryptographic processing in accordance with the control program; and
an auxiliary arithmetic processor (40) which executes predetermined arithmetic processing under control of the arithmetic processor (30),
wherein if the first data does not match a data format defined by a software interface of the auxiliary arithmetic processor (40), the arithmetic processor (30) controls to generate second data by processing the first data so as to match the data format, and to store the generated second data in a data table provided in the second memory.

8. The information processing apparatus according to claim 7, wherein the arithmetic processor controls to encrypt the cryptographic private key with a cryptographic key stored in the first memory (10), to generate the second data, and to store the second data in the data table by using part of the encrypted cryptographic private key as an identifier.
